Europäisches Patentamt

European Patent Office

Office européen des brevets

(19)

(11) **EP 0 452 884 B1**

(12) **EUROPEAN PATENT SPECIFICATION**

(45) Date of publication and mention
of the grant of the patent:
**16.09.1998 Bulletin 1998/38**

(51) Int Cl.⁶: **G11B 20/12**, G11B 27/30,
G11B 7/007

(21) Application number: **91106058.0**

(22) Date of filing: **16.04.1991**

(54) **A rewritable optical disc**

Zum Wiederaufzeichnen geeignete optische Platte

Disque optique réenregistrable

(84) Designated Contracting States:
**DE FR GB**

(30) Priority: **20.04.1990 JP 104515/90**

(43) Date of publication of application:
**23.10.1991 Bulletin 1991/43**

(73) Proprietor: **SONY CORPORATION**
**Tokyo (JP)**

(72) Inventor: **Tadashi, Otsuki,**
**c/o SONY CORPORATION**
**Shinagawa-ku, Tokyo (JP)**

(74) Representative:
**Schmidt-Evers, Jürgen, Dipl.-Ing. et al**
**Patentanwälte**
**Mitscherlich & Partner,**
**Postfach 33 06 09**
**80066 München (DE)**

(56) References cited:
**EP-A- 0 216 704       EP-A- 0 328 240**
**DE-A- 3 611 561       DE-A- 3 734 638**
**DE-A- 3 741 404**

**Description**

BACKGROUND OF THE INVENTION

The present invention relates to an optical disk, and more particularly relates to an optical disk which applies preferably to the case where, for example, a magneto-optic disk is used as a postscript type optical disk.

The prior art optical disk includes an optical disk (or postscript type optical disk (WORM disk)) capable of writing a predetermined information data once only, and a rewriting optical disk (or magneto-optic disk (MO disk)) capable of writing information data over and over again.

The WORM disk and the MO disk are different in recording and reproducing principle and structure of a recording medium, and hence for realizing such recording and reproducing apparatus as is capable of utilizing both together, it is necessary to use selectively a recording laser power characteristic adjusted to characteristics of each recording medium and a reproducing equalizer characteristic.

Meanwhile, recording mediums of various constructions such as perforated disk, phase changing disk, alloy type disk and the like are used for WORM disk, and hence for realizing recording and reproducing on any disks, it is necessary that a recording laser power characteristic and a reproducing equalizer characteristic be adjusted according to species of WORM disk as a recording and reproducing apparatus, and a problem is unavoidable such that a general construction of the recording and reproducing apparatus becomes complicated.

On the other hand, since the WORM disk allows writing one time only and no more, it is considered as advantageous to prevent tampering with information data.

Practically, however, when writing information data, if a sector with a write/read error present (hereinafter called N.G. sector) in a user recording area is detected, a so-called alternation process wherein information data to be written in the N.G. sector is written in another sector instead of the N.G. sector is carried out, which allows information data to be tampered with in a simple & unrevealing fashion, therefore WORM disk is considered to be equivalent to the rewriting MO disk.

Further in WORM disk, a flag information and others for indicating whether or not predetermined sectors of the user recording area are unused or whether or not an alternation process has been carried out are written within a corresponding sector.

That is, in WORM disk, when searching a space sector through detecting whether or not predetermined sectors of the user recording area are unused, a flag information in the sector must be read and also an error detection correction must be applied to the content, thus requiring so long time for the process.

However, in the case where a predetermined sector of the user recording are is decided to be N.G. sector and an alternation process is carried out, the content itself of a flag information read out for detecting whether or not it is unused becomes uncertain, and for making it assured, information data in the sector must further be read out to an error detection correction, and thus it is still unsatisfactory as a whole in respect of time for the process and precision.

To solve such problems, from detecting whether or not a predetermined sector of the user recording area is unused and thus forbidding overwrite of the used sector, an MO disk which is regarded as equivalent to WORM disk may be used as a postscript type optical disk.

From DE-A1-37 34 638, EP-A2-0 328 240, EP-A2-0 216 704 and DE-A1-37 41 404, an optical disc according to the preamble of claim 1 is known.

According to DE-A1-37 34 638, the optical disc comprises a data area for recording information data and a control information area for recording control information data, wherein the control information data may contain an information about the written sectors of the data area.

The optical disc of EP-A2-0 328 240 comprises adressable rewritable data storage areas as well as a so called volume table of contents (VTOC) for indicating which storage areas are allocated, unallocated or unformatted ones of the addressable data storage areas.

According to EP-A2-0 216 704, a mark is written on an optical disc after data have been written so as to prevent over-writing of the data.

Finally, document DE-A1-37 41 404 proposes an optical disc which comprises areas indicating whether data have already been written on said disc.

SUMMARY OF THE INVNETION

In view of the foregoing, an object of the present invention is to provide an optical disc in which an rewritable optical disc may be used as a postscript type optical disc and which, in particular, is capable of easily and accurately detecting whether or not all the sectors of the user recording area have been used.

According to the present invention, this object is achieved by a rewritable optical disc as defined in claim 1. The dependent claims define advantageous embodiments of the present invention.

The nature, principle and utility of the invention will become more apparent from the following detailed description when read in conjunction with the accompanying drawings in which like parts are designated by like reference numerals or characters.

BRIEF DESCRIPTION OF THE DRAWINGS

In the accompanying drawings:

FIG. 1 is block diagram representing one embodiment of a magneto-optic disk device using an optical disk according to the present invention;

FIGS. 2 and 3 are schematic diagrams showing a format of the optical disk of the embodiment;

FIG. 4 is a schematic diagram showing a format in a written sector flag zone;

FIG. 5 is a schematic diagram for illustrating an alternation process at the time when the written sector flag zone is generated.

## DETAILED DESCRIPTION OF THE INVENTION

Preferred embodiments of this invention will be described with reference to the accompanying drawings:

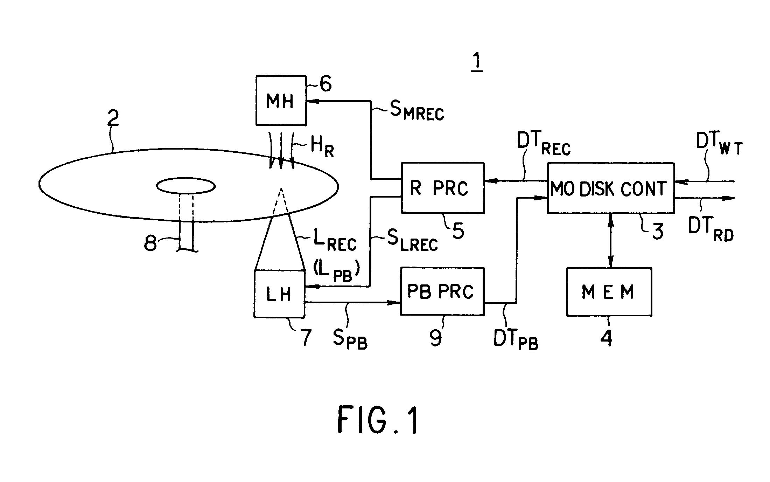

In FIG. 1, a reference numeral 1 denotes a magneto-optic disk device as a whole using a magneto-optic disk (MO disk) 2 according to the present invention, wherein information data according to a write data $DT_{WT}$ inputted together with a write instruction from a host computer (not shown) is written in the MO disk 2, and information data read out of the MO disk 2 is sent to the host computer as a read data $DT_{RD}$ according to a read instruction inputted from the host computer.

That is, when writing the information data in the MO disk 2 first, the write instruction and the write data $DT_{WT}$ are written once in a memory circuit 4 through a magneto-optic disk control circuit 3 constructed of a microcomputer.

The magneto-optic disk control circuit 3 blocks the write data $DT_{WT}$ written in the memory circuit 4 at every sector comprising, for example, 1024 bytes (or 512 bytes) in recording unit and adds a predetermined. additional information thereto to read as a recording information data $DT_{REC}$, and sends it to a recording processing circuit 5.

The recording processing circuit 5 modulates the inputted recording information data $DT_{REC}$ to generate a magnetic recording drive signal $S_{MREC}$ and a light recording drive signal $S_{LREC}$, and sends them to a magnetic head 6 and a light head 7 respectively.

Thus the magnetic head 6 and the light head 7 apply a recording magnetic field $H_R$ according to the magnetic recording drive signal $S_{MREC}$ from a surface side of the MO disk 2 driven to rotate round a shaft 8, irradiate a recording laser beam $L_{REC}$ according to the light recording drive signal $S_{LREC}$ from a rear side of the MO disk 2, and thus information data according to the write data $DT_{WT}$ is written in the MO disk 2.

On the other hand, when reading information data out of the MO disk 2, the read instruction is inputted to the magneto-optic disk control circuit 3, and thus the magneto-optic disk control circuit 3 drives the light head 7 to emit a light according to the read instruction and a reproducing laser beam $L_{PB}$ is applied onto the MO disk 2 at a predetermined position.

As a result the light head 7 receives a reflected light from the MO disk 7, and a reproducing signal $S_{PB}$ obtained thereby is sent to a reproducing processing circuit 9.

The reproducing processing circuit 9 generates a reproducing information data $DT_{PB}$ from binary-coding and demodulating the reproducing signal $S_{PB}$, and sends it to the magneto-optic disk control circuit 3 to write once in the memory circuit 4.

The magneto-optic disk control circuit 3 executes, for example, an error detection correction process on the reproducing information data $DT_{PB}$ written in the memory circuit 4 and blocks it at the same time to read as a reproducing information data $DT_{RD}$ and sends it to the host computer.

Thus information data according to the read instruction is ready for reading out of the MO disk 2.

Here the MO disk 2 comprises a 5-inch disk having a format proposed, for example, in ISO/IEC DIS 10089 (International Organization for standization/International Electrotechnical Commission Draft International Standard 10089).

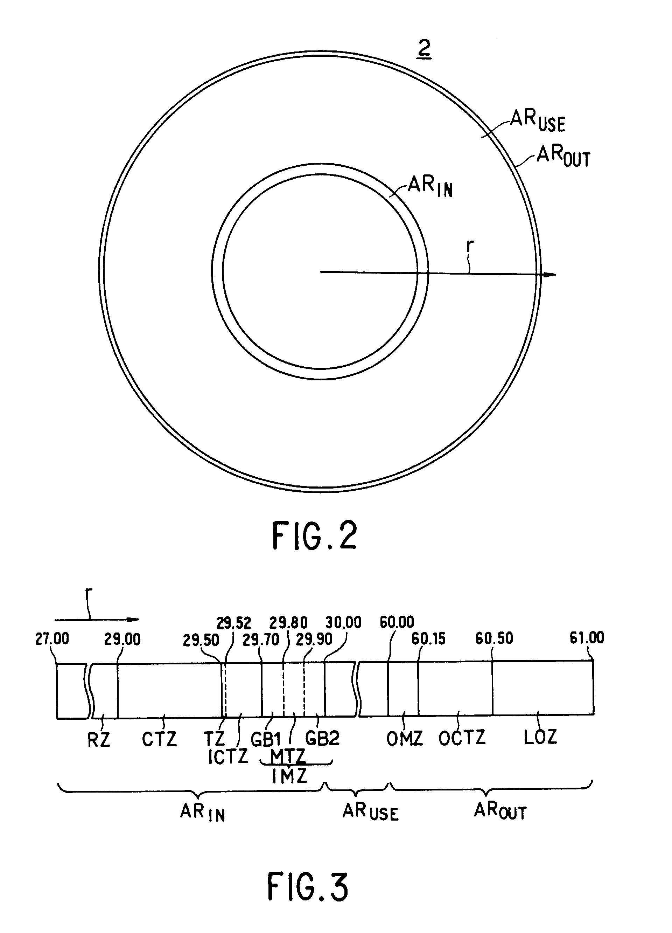

That is, in the case of this embodiment, the MO disk 2 has a helical recording track, wherein, as shown in FIG. 2, an inner periphery side extended area $AR_{IN}$ is formed in a zone 27 to 30 mm radial in the direction r from an inner periphery side, the user recording area $AR_{USE}$ is formed in a zone 30 to 60 mm radial therefrom, and an outer periphery side extended area $AR_{OUT}$ is formed in a zone 60 to 61 mm radial further therefrom in that order.

Practically, as shown in FIG. 3, a mirror zone RZ is formed in an area 27.00 to 29.00 mm radial in the direction r, and a PEP control track zone CTZ with PEP information recorded therein is formed in a zone 29.00 to 29.50 mm radial further therefrom in the inner periphery side extended area $AR_{IN}$.

The PEP information comprises rotation control information of the optical disk, modulation system, species of the disk and so forth, these being recorded in embossed pits.

A transition zone TZ is formed in an area 29.50 to 29.52 mm radial coming on an outer periphery side of the PEP control track zone CTZ, and an inner periphery side SFP control track zone ICTZ with SFP information recorded therein is formed in an area 29.52 to 29.70 mm radial following thereto.

Including PEP information, the SFP information comprises medium information of the optical disk, and system information indicating power and pulse width of the recording reproducing laser beam, these being recorded in embossed pits.

An area 29.70 to 30.00 mm radial coming on an outer periphery side of the inner periphery side SFP control track zone ICTZ is defined as an inner periphery side manufacturer use zone IMZ, and practically a zone 29.80 to 29.90 mm radial coming between first and second guard bands GB1 and GB2 29.70 to 29.80 mm radial and 29.90 to 30.00 mm radial respectively is used as a manufacturer test zone MTZ.

Then in the outer periphery side extended area $AR_{OUT}$, a zone 60.00 to 60.15 mm radial coming in the direction r is defined as an outer periphery side manufacturer use zone OMZ, an outer periphery side SFP control track zone OCTZ is formed in a zone 60.15 to 60.50 mm radial following thereto, and a zone 60.50 to 61.00 mm radial following further thereto is used as a lead-out zone LOZ.

Normally, a value "0001 0000" indicating WORM disk or a value "0010 0000" indicating rewriting MO disk is set as a data for 1 byte indicating a species of the disk of PEP information of the PEP control track zone CTZ, however, since the MO disk 2 is used as a postscript type optical disk in the case of this embodiment, a value "0001 0001", for example, is set, and SFP information of the inner periphery side SFP control track zone ICTZ and the outer periphery SFP control track zone OCTZ is also modified correspondingly thereto and so set.

Further, a recording track 1.6 μm in track width is formed for 18,751 tracks in the user recording area $AR_{USE}$, and in the case where one sector as recording unit is 1,024 bytes (or 512 bytes), 17 sectors (or 31 sectors) will be formed on one track, therefore tracks including 318,767 sectors (or 581,281 sectors) are formed in the user recording area $AR_{USE}$ as a whole.

Here, in the case of MO disk 2 of this embodiment, the written sector flag zone WSFZ indicating whether or not all sectors of the user recording area $AR_{USE}$ are used (written) in 1-bit flag information is formed in the second guard band GB2 of the inner periphery side manufacturer use zone IMZ disposed on an inner periphery side of the user recording area $AR_{USE}$.

Where one sector comes in 1,024 bytes, 318,767 bytes are included in the user recording area $AR_{USE}$ as a whole, therefore the written sector flag zone WSFZ comprises a zone of 39 sectors (3 tracks), that is, from 0th sector of -3rd track to 16th sector of -1st track, as will be obtained from the following equation:

$$\frac{318767/(8 * 1024)}{17} = 38.91 \text{ sectors}$$

$$= 2.28 \text{ tracks} \quad (1)$$

Then, in case one sector comes in 512 bytes, 581,281 sectors will be included in the user recording area $AR_{USE}$ as a whole, it comprises a zone for 142 sectors (5 tracks), that is, from 0th sector of -5th track to 30th sector of -1st track, as will be obtained from the following equation:

$$\frac{581,281/(8 * 512)}{31} = 141.91 \text{ sectors}$$

$$= 4.58 \text{ tracks} \quad (2)$$

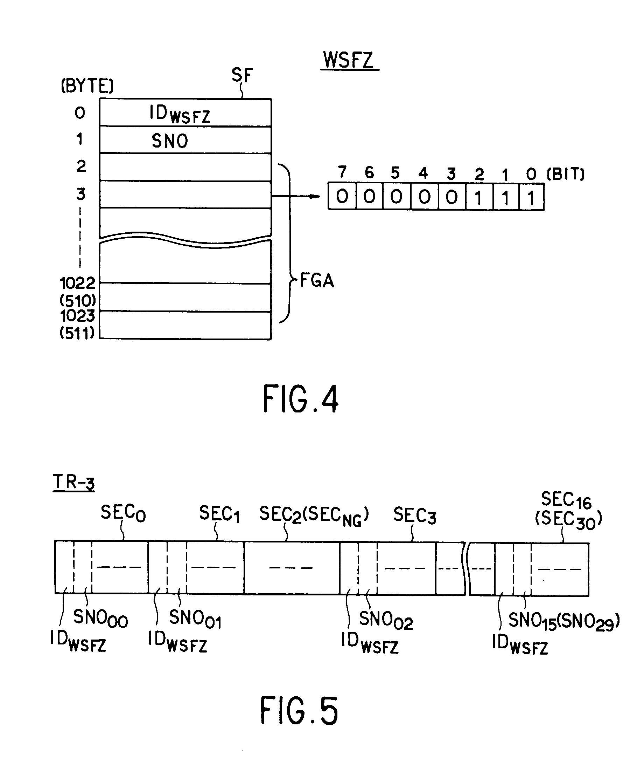

Practically, as shown in FIG. 4, in a sector format SF of 39 sectors (or 142 sectors) forming the written sector flag zone WSFZ, a written sector flag zone identifier $ID_{WSFZ}$ comprising, for example, a hexadecimal value

$(01)_H$ is written in the 1st byte 0, a sector number SNO comprising values 0 to 38 (or 141) is written in the 2nd byte 1 following thereto, and those from the 3rd byte 2 following further thereto to the 1024th byte 1023 (or the 512th byte 511) are used as a flag area FHA.

Flags indicating whether or not 8 sectors of the user recording area $AR_{USE}$ from Nth sector to $(N + 7)$th sector are used are set in a value "1" or "0" in those from the 1st bit 0 of LSB to the 8th bit 7 of MSB of the 2nd byte of the flag area FGA, or the 4th byte 3.

Then, a strong error detection correction code is added to the written sector flag zone WSFZ, thereby preventing an error from arising except drop-out or the like.

Further in the magneto-optic disk device 1 of the embodiment, as shown in FIG. 5, values "1", "2" and "3" are set as the sector number SNO to, for example, the 1st sector $SEC_0$ of a -3rd track $TR_{-3}$, the 2nd sector $SEC_1$ and the 3rd sector $SEC_2$ in that order, and when a write error is detected on the 3rd sector $SEC_2$, the 3rd sector $SEC_2$ is subjected to an alternation process as an N.G. sector $SEC_{NG}$.

That is, the 3rd sector $SEC_2$ specified as the N.G. sector $SEC_{NG}$ according to the alternation process is neglected, a value "3" is written in the 4th sector $SEC_3$ following thereto as the sector number SNO, and the written sector flag zone WSFZ is generated by means of sectors $SEC_3$ to $SEC_{16}$ in that order thereafter.

Practically, when one sector comes in 1,024 bytes, the written sector flag zone WSFZ is secured for 3 tracks or 51 sectors, and hence it is understood that a tolerance of 12 sectors is ensured against necessary 39 sectors calculated through Eq. (1).

Accordingly, there secured are enough sectors if 2 bytes for the written sector flag zone identifier $ID_{WSFZ}$ and the sector number SNO and that for error detection correction code are taken into consideration, and thus the alternation process can be executed thereby.

On the other hand, when one sector comes in 512 bytes, it is secured for 5 tracks or 155 sectors, and hence it is understood that a tolerance of 13 sectors is ensured against necessary 142 sectors calculated through Eq. (2).

Accordingly, enough sectors are present as in the case where one sector comes in 1,024 bytes, and thus the alternation process can be executed thereby likewise.

In the aforementioned construction, for example, all the flags of the written sector flag zone WSFZ of the MO disk 2 are set to the value "0" at the time of shipment.

In the magneto-optic disk control circuit 3 of the optical disk device 1 to write a desired information data in the user recording area $AR_{USE}$ of the MO disk 2 in such state, a content of the written sector flag zone WSFZ is read first to the memory circuit 4 in advance to recording the information data.

Subsequently the content of the written sector flag zone WSFZ of the memory circuit 4 is searched to detect a space sector, or a sector with the flag at a value "0", and a desired information data is written in the space sector.

The magneto-optic disk control circuit 3 then sets the flag of the written sector flag zone WSFZ on the MO disk 2 corresponding to the sector in which the information data is written to a value "1".

In the magneto-optic disk device 1, the arrangement is such that rewriting or overwriting cannot be allowed to a sector with the flag of the written sector flag zone WSFZ set to the value "1".

According to the aforementioned construction, an optical disk capable of detecting easily whether or not the user recording area $AR_{USE}$ has been used at every sectors can be realized by referring to the written sector flag zone WSFZ in which a plurality of flags for indicating whether or not the user recording area $AR_{USE}$ is used at every sectors are set.

Further according to the above-described construction, an alternation process is applied to the written sector flag zone WSFZ, thereby detecting securely whether or not the user recording area $AR_{USE}$ has been used at every sectors.

Thus, the written sector flag zone WSFZ is provided on the MO disk, and rewriting and overwriting are not allowed for the written sectors, thereby enhancing a utility from utilizing the MO disk as a postscript type optical disk.

Further in the aforementioned embodiment, the description has referred to the case where MO disk according to a 5-inch format is used, however, a 3-inch format and another MO disk may be used.

## Claims

1. A rewritable optical disc (2),

wherein information data are writable in and/or readable from sectors ($SEC_0$ ...) of an user recording area ($AR_{USE}$),

comprising a written sector flag zone (WSFZ) outside said user recording area ($AR_{USE}$) for setting a flag ($ID_{WSFZ}$, $SNO_{00}$ ...) indicating whether or not said information data have been recorded at each of all sectors in said user recording area ($AR_{USE}$) and having an area for setting such flag for each of said sectors,

**characterized in that**

said written sector flag zone (WSFZ) contains a plurality of alternate sectors, such that when writing a certain one flag in said written sector flag zone (WSFZ), if a no-good sector is detected, said no-good sector is designated as invalid and said flag is written into the next useable good sector.

2. A rewritable optical disc according to claim 1, **characterized in that**

said flag ($ID_{WSFZ}$, $SNO_{00}$ ...) comprises 1 bit; and
said written sector flag zone (WSFZ) is capable of recording more than N bits, wherein N corresponds to the total number of all sectors of said user recording area ($AR_{USE}$).

3. A rewritable optical disc according to claim 1 or 2, **characterized in that**

said flag ($ID_{WSFZ}$, $SNO_{00}$...) written in said written sector flag zone (WSFZ) is encoded by an error correction code.

4. A magneto-optical disc device, comprising

a rewritable optical disc (2) according to any one of claims 1-3;
a flag setting means (3, 4, 5, 6) for setting said flag ($ID_{WSFZ}$, $SNO_{00}$ ...) in said written sector flag zone (WSFZ) corresponding to a sector of said user recording area ($AR_{USE}$) at which said information data has been recorded;
reproducing means (7, 9) for reproducing said flag data ($ID_{WSFZ}$, $SNO_{00}$ ...) recorded in said written sector flag zone (WSFZ); and
record inhibiting means (3, 5) for inhibiting a sector of said user recording area ($AR_{USE}$) from recording information data if a flag of said reproduced flag data ($ID_{WSFZ}$, $SNO_{00}$ ...) corresponding to said sector of said user recording area ($AR_{USE}$) indicates that information data have already been recorded at said sector.

## Patentansprüche

1. Wiederbeschreibbare optische Platte (2),

bei der Informationsdaten in Sektoren ($SEC_0$...) eines Benutzeraufzeichnungsbereichs ($AR_{USE}$) einschreibbar und/oder aus diesen auslesbar sind,

mit einer außerhalb des Benutzeraufzeichnungsbereichs ($AR_{USE}$) liegenden Flag-Zone (WSFZ) für die Kennzeichnung von beschriebenen Sektoren zum Setzen eines Flags ($ID_{WSFZ}$, $SNO_{00}$ ...), das angibt, ob in jedem von allen Sektoren des Benutzeraufzeichnungsbereich ($AR_{USE}$) Informationsdaten aufgezeichnet sind oder nicht, wobei diese Flag-Zone einen Bereich zum Setzen eines solchen Flags für jeden der genannten Sektoren aufweist,

**dadurch gekennzeichnet,**

daß die Flag-Zone (WSFZ) für die Kennzeichnung von beschriebenen Sektoren eine Mehrzahl von abwechselnden Sektoren aufweist, so daß dann, wenn beim Einschreiben eines bestimmten Flags in die Flag-Zone (WSFZ) für die Kennzeichnung von beschriebenen Sektoren ein schlechter Sektor detektiert wird, dieser schlechte Sektor als ungültig gekennzeichnet und das genannte Flag in den nächsten benutzbaren Sektor eingeschrieben wird.

**2.** Wiederbeschreibbare optische Platte nach Anspruch 1,
         **dadurch gekennzeichnet,**

daß das genannte Flag ($ID_{WSFZ}$, $SNO_{00}$ ..) ein Bit umfaßt,
und daß die Flag-Zone (WSFZ) für die Kennzeichnung von beschriebenen Sektoren das Aufzeichnen von mehr als N Bits erlaubt, wobei N der Gesamtzahl aller Sektoren des Benutzeraufzeichnungsbereichs ($AR_{USE}$) entspricht.

**3.** Wiederbeschreibbare optische Platte nach Anspruch 1 oder 2,
         **dadurch gekennzeichnet,**

daß das in die Flag-Zone (WSFZ) für die Kennzeichnung von beschriebenen Sektoren eingeschriebene Flag ($ID_{WSFZ}$, $SNO_{00}$ ...) mit einem Fehlerkorrekturcode codiert ist.

**4.** Vorrichtung für magneto-optische Platten

mit einer wiederbeschreibbaren optischen Platte (2) nach einem der Ansprüche 1 bis 3,
mit einer Flag-Setzeinrichtung (3, 4, 5, 6) zum Setzen des genannten Flags ($ID_{WSFZ}$, $SNO_{00}$ ...) in der Flag-Zone (WSFZ) für die Kennzeichnung von beschriebenen Sektoren, das einem Sektor des Benutzeraufzeichnungsbereichs ($AR_{USE}$) entspricht, in welchem die Informationsdaten aufgezeichnet wurden,
mit einer Wiedergabeeinrichtung (7, 9) zum Reproduzieren der in der Flag-Zone (WSFZ) für die Kennzeichnung von beschriebenen Sektoren aufgezeichneten Flag-Daten ($ID_{WSFZ}$, $SNO_{00}$...),
und mit einer Aufzeichnungs-Sperreinrichtung (3, 5) zum Sperren eines Sektors des Benutzeraufzeichnungsbereichs ($AR_{USE}$) gegen das Aufzeichnen von Informationsdaten, wenn ein Flag der reproduzierten Flag-Daten ($ID_{WSFZ}$, $SNO_{00}$...), das diesem Sektor des Benutzeraufzeichnungsbereichs ($AR_{USE}$) entspricht, anzeigt, daß in diesem Sektor bereits Informationsdaten aufgezeichnet sind.

**Revendications**

**1.** Disque optique réinscriptible (2),

dans lequel des données d'informations peuvent être écrites sur des secteurs ($SEC_0$...) d'une zone d'enregistrement de l'utilisateur ($AR_{USE}$) ou être lues à partir de ceux-ci, comprenant une zone des indicateurs des secteurs écrits (WFSZ) à l'extérieur de ladite zone d'enregistrement de l'utilisateur ($AE_{USE}$) afin d'établir un indicateur ($ID_{WSFZ}$, $SNO_{00}$...) indiquant si lesdites données d'informations ont été enregistrées ou non au niveau de chacun de tous les secteurs dans ladite zone d'enregistrement de l'utilisateur ($AR_{USE}$) et comportant une zone destinée à établir un tel indicateur pour chacun desdits secteurs,

     caractérisé en ce que

ladite zone des indicateurs des secteurs écrits (WSFZ) contient une pluralité de secteurs de réserve, de sorte que lorsque l'on écrit un certain premier indicateur dans ladite zone des indicateurs des secteurs écrits (WSFZ), si un secteur défectueux est détecté, ledit secteur défectueux est désigné comme étant invalide et ledit indicateur est écrit dans le secteur correct utilisable suivant.

**2.** Disque optique réinscriptible selon la revendication 1,
     caractérisé en ce que

ledit indicateur ($ID_{WSFZ}$, $SNO_{00}$...) comprend 1 bit, et
ladite zone des indicateurs des secteurs écrits (WSFZ) permet d'enregistrer plus de N bits, dans lequel N correspond au nombre total de tous les secteurs de ladite zone d'enregistrement de l'utilisateur ($AR_{USE}$)

**3.** Disque optique réinscriptible selon la revendication 1 ou 2,
     caractérisé en ce que

ledit indicateur ($ID_{WSFZ}$, $SNO_{00}$...) écrit dans ladite zone des indicateurs des secteurs écrits (WSFZ) est codé par un code de correction d'erreur.

**4.** Dispositif de disque magnéto-optique, comprenant

un disque optique réinscriptible (2) selon l'une quelconque des revendications 1 à 3,
un moyen d'établissement d'indicateurs (3, 4, 5, 6) destiné à établir ledit indicateur ($ID_{WSFZ}$, $SNO_{00}$...) dans ladite zone des indicateurs des secteurs écrits (WSFZ) en correspondance avec un secteur de ladite zone d'enregistrement de l'utilisateur ($AR_{USE}$) au niveau duquel lesdites données d'informations ont été enregistrées,

un moyen de reproduction (7, 9) destiné à reproduire lesdites données d'indicateurs ($ID_{WSFZ}$, $SNO_{00}$...) enregistrées dans ladite zone des indicateurs des secteurs écrits (WSFZ), et

un moyen d'interdiction d'enregistrement (3, 5) destiné à interdire un secteur de ladite zone d'enregistrement de l'utilisateur ($AR_{USE}$) pour les données d'informations d'enregistrement si un indicateur desdites données d'indicateur reproduites ($ID_{WSFZ}$, $SNO_{00}$...) correspondant audit secteur de ladite zone d'enregistrement de l'utilisateur ($Ar_{USE}$) indique que des données d'informations ont déjà été enregistrées au niveau dudit secteur.

FIG.1

FIG.2

FIG.3

WSFZ

(BYTE)

| | SF |
|---|---|
| 0 | $ID_{WSFZ}$ |
| 1 | SNO |
| 2 | |
| 3 | |

7 6 5 4 3 2 1 0 (BIT)

| 0 | 0 | 0 | 0 | 0 | 1 | 1 | 1 |
|---|---|---|---|---|---|---|---|

1022
(510)
1023
(511)

FGA

FIG.4

TR-3

$SEC_0$    $SEC_1$    $SEC_2(SEC_{NG})$    $SEC_3$    $SEC_{16}$ $(SEC_{30})$

$SNO_{00}$    $SNO_{01}$    $SNO_{02}$    $SNO_{15}(SNO_{29})$

$ID_{WSFZ}$    $ID_{WSFZ}$    $ID_{WSFZ}$    $ID_{WSFZ}$

FIG.5